(19)

Europäisches
Patentamt
European
Patent Office
Office européen
des brevets

(11)  **EP 4 084 122 A1**

(12)  **EUROPEAN PATENT APPLICATION**
published in accordance with Art. 153(4) EPC

(43) Date of publication:
**02.11.2022  Bulletin 2022/44**

(21) Application number: **20906865.9**

(22) Date of filing: **23.12.2020**

(51) International Patent Classification (IPC):
$H01M\ 4/13^{(2010.01)}$      $H01M\ 4/62^{(2006.01)}$
$H01M\ 4/64^{(2006.01)}$     $H01M\ 4/66^{(2006.01)}$
$H01M\ 10/052^{(2010.01)}$   $H01M\ 10/0562^{(2010.01)}$
$H01M\ 50/10^{(2021.01)}$    $H01M\ 50/531^{(2021.01)}$

(52) Cooperative Patent Classification (CPC):
**H01M 4/13; H01M 4/62; H01M 4/64; H01M 4/66;
H01M 10/052; H01M 10/0562; H01M 50/10;
H01M 50/531;** Y02E 60/10; Y02P 70/50

(86) International application number:
**PCT/JP2020/048308**

(87) International publication number:
**WO 2021/132407 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **27.12.2019  JP 2019239698**

(71) Applicant: **Panasonic Intellectual Property
Management Co., Ltd.
Osaka-shi, Osaka 540-6207 (JP)**

(72) Inventors:
• **NAGAO Kenji
Osaka 540-6207 (JP)**

• **SUGIMOTO Yuta
Osaka 540-6207 (JP)**
• **OSHIMA Tatsuya
Osaka 540-6207 (JP)**
• **NAGAMINE Kenta
Osaka 540-6207 (JP)**
• **MIYAZAKI Akinobu
Osaka 540-6207 (JP)**
• **NISHIYAMA Seiji
Osaka 540-6207 (JP)**

(74) Representative: **Eisenführ Speiser
Patentanwälte Rechtsanwälte PartGmbB
Postfach 10 60 78
28060 Bremen (DE)**

(54)  **BATTERY**

(57)  A battery 1000 of the present disclosure includes a first electrode layer 10, a second electrode layer 11, and an electrolyte layer 12 including a first solid electrolyte material. The battery 1000 satisfies (A), (B), (C), or (D). (A) The current collector layer 101 has, in at least a partial region thereof, a copper content of less than 50 mass%. (B) At least one selected from the group consisting of the current collector layer 101 and an electrode lead 13 has, in at least a partial region thereof, a copper content of less than 50 mass%. (C) At least one selected from the group consisting of the current collector layer 101 and an exterior body 14 has, in at least a partial region thereof, a copper content of less than 50 mass%. (D) at least one selected from the group consisting of the current collector layer 101, the electrode lead 13, and the exterior body 14 has, in at least a partial region thereof, a copper content of less than 50 mass%.

FIG. 1

EP 4 084 122 A1

**Description**

TECHNICAL FIELD

The present disclosure relates to a battery.

BACKGROUND ART

Patent Literature 1 discloses a positive electrode including: a halide solid electrolyte; a positive electrode active material; and a positive electrode current collector, as well as a battery. As the positive electrode current collector, an aluminum powder is used.

CITATION LIST

Patent Literature

Patent Literature 1: WO 2019/146217

SUMMARY OF INVENTION

Technical Problem

The present disclosure provides a battery having an improved thermal stability.

Solution to Problem

A battery according to one aspect of the present disclosure is a battery including:

a first electrode layer;
a second electrode layer; and
an electrolyte layer disposed between the first electrode layer and the second electrode layer, and including a first solid electrolyte material, wherein
the first electrode layer includes a current collector layer and a mixture layer,
the mixture layer includes an active material and a second solid electrolyte material,
at least one selected from the group consisting of the first solid electrolyte material and the second solid electrolyte material includes Li, M, and X,
the M is at least one selected from the group consisting of metal elements other than Li and metalloid elements,
the X is at least one selected from the group consisting of F, Cl, Br, and I, and
the battery satisfies the following (A), (B), (C), or (D):

(A) the current collector layer has, in at least a partial region thereof, a copper content of less than 50 mass%;
(B) the battery further includes an electrode lead connected to the current collector layer, and
at least one selected from the group consisting of the current collector layer and the electrode lead has, in at least a partial region thereof, a copper content of less than 50 mass%;
(C) the battery further includes an exterior body covering the first electrode layer, the second electrode layer, and the electrolyte layer, and
at least one selected from the group consisting of the current collector layer and the exterior body has, in at least a partial region thereof, a copper content of less than 50 mass%; or
(D) the battery further includes: an electrode lead connected to the current collector layer; and an exterior body covering the first electrode layer, the second electrode layer, and the electrolyte layer, and
at least one selected from the group consisting of the current collector layer, the electrode lead, and the exterior body has, in at least a partial region thereof, a copper content of less than 50 mass%.

Advantageous Effects of Invention

The present disclosure provides a battery having an improved thermal stability.

BRIEF DESCRIPTION OF DRAWINGS

FIG. 1 is a schematic view showing a cross section of a battery 1000 according to Embodiment 1.
FIG. 2 is a schematic view showing a cross section of a battery 2000 according to Embodiment 2.
FIG. 3 is a schematic view showing a cross section of a battery 3000 according to Embodiment 3.
FIG. 4 is a schematic view showing a cross section of a battery 4000 according to Embodiment 4.
FIG. 5 is a schematic view showing a cross section of a battery 5000 according to Embodiment 5.
FIG. 6 is a schematic view showing a cross section of a battery 6000 according to Embodiment 6.
FIG. 7 is a schematic view showing a cross section of a battery 7000 according to Embodiment 7.
FIG. 8 is a graph showing the generation amounts of hydrogen chloride and hydrogen bromide generated by thermal decomposition of halide solid electrolyte $Li_3YBr_2Cl_4$.

DESCRIPTION OF EMBODIMENTS

A battery according to a first aspect of the present disclosure is a battery including:

a first electrode layer;
a second electrode layer; and
an electrolyte layer disposed between the first electrode layer and the second electrode layer, and including a first solid electrolyte material, wherein
the first electrode layer includes a current collector layer and a mixture layer,
the mixture layer includes an active material and a second solid electrolyte material,
at least one selected from the group consisting of the first solid electrolyte material and the second solid electrolyte material includes Li, M, and X,
the M is at least one selected from the group consisting of metal elements other than Li and metalloid elements,
the X is at least one selected from the group consisting of F, Cl, Br, and I, and
the battery satisfies the following (A), (B), (C), or (D):

(A) the current collector layer has, in at least a partial region thereof, a copper content of less than 50 mass%;
(B) the battery further includes an electrode lead connected to the current collector layer, and
at least one selected from the group consisting of the current collector layer and the electrode lead has, in at least a partial region thereof, a copper content of less than 50 mass%;
(C) the battery further includes an exterior body covering the first electrode layer, the second electrode layer, and the electrolyte layer, and
at least one selected from the group consisting of the current collector layer and the exterior body has, in at least a partial region thereof, a copper content of less than 50 mass%; or
(D) the battery further includes: an electrode lead connected to the current collector layer; and an exterior body covering the first electrode layer, the second electrode layer, and the electrolyte layer, and
at least one selected from the group consisting of the current collector layer, the electrode lead, and the exterior body has, in at least a partial region thereof, a copper content of less than 50 mass%.

The battery according to the first aspect can improve the thermal stability.
In a second aspect of the present disclosure, for example, in the battery according to the first aspect, the battery may satisfy the (A), and the current collector layer may have, in at least the partial region, a copper content of less than 3.5 mass%.
The battery according to the second aspect can further improve the thermal stability.
In a third aspect of the present disclosure, for example, in the electrode according to the first aspect, the battery may satisfy the (B), and the at least one selected from the group consisting of the current collector layer and the electrode lead may have, in at least the partial region, a copper content of less than 3.5 mass%.
The battery according to the third aspect can further improve the thermal stability.
In a fourth aspect of the present disclosure, for example, in the battery according to the first aspect, the battery may satisfy the (C), and the at least one selected from the group consisting of the current collector layer and the exterior body may have, in at least the partial region, a copper content of less than 3.5 mass%.
The battery according to the fourth aspect can further improve the thermal stability.
In a fifth aspect of the present disclosure, for example, in the battery according to the first aspect, the battery may satisfy the (D), and the at least one selected from the group consisting of the current collector layer, the electrode lead, and the exterior body may have, in at least the partial region, a copper content of less than 3.5 mass%.

The battery according to the fifth aspect can further improve the thermal stability.

In a sixth aspect of the present disclosure, for example, in the battery according to any one of the second to fifth aspects, the current collector layer may include aluminum as a main component.

In a seventh aspect of the present disclosure, for example, in the electrode according to the sixth aspect, the current collector layer may further include an element other than aluminum.

A battery according to an eighth aspect of the present disclosure is a battery including:

a first electrode layer;
a second electrode layer;
an electrolyte layer disposed between the first electrode layer and the second electrode layer, and including a first solid electrolyte material; and
an exterior body covering the first electrode layer, the second electrode layer, and the electrolyte layer, wherein the first electrode layer includes a mixture layer,
the mixture layer includes an active material and a second solid electrolyte material,
at least one selected from the group consisting of the first solid electrolyte material and the second solid electrolyte material includes Li, M, and X,
the M is at least one selected from the group consisting of metal elements other than Li and metalloid elements,
the X is at least one selected from the group consisting of F, Cl, Br, and I, and
the exterior body has, in at least a partial region thereof, a copper content of less than 50 mass%.

The battery according to the eighth aspect can improve the thermal stability.

In a ninth aspect of the present disclosure, for example, in the battery according to the eighth aspect, the exterior body may have, in at least the partial region, a copper content of less than 3.5 mass%.

The battery according to the ninth aspect can further improve the thermal stability.

In a tenth aspect of the present disclosure, for example, in the battery according to any one of the first to ninth aspects, the exterior body may face, in at least the partial region, at least one selected from the group consisting of the electrolyte layer and the first electrode layer.

The battery according to the tenth aspect can further improve the thermal stability.

Hereinafter, embodiments of the present disclosure will be described with reference to the drawings.

(Embodiment 1)

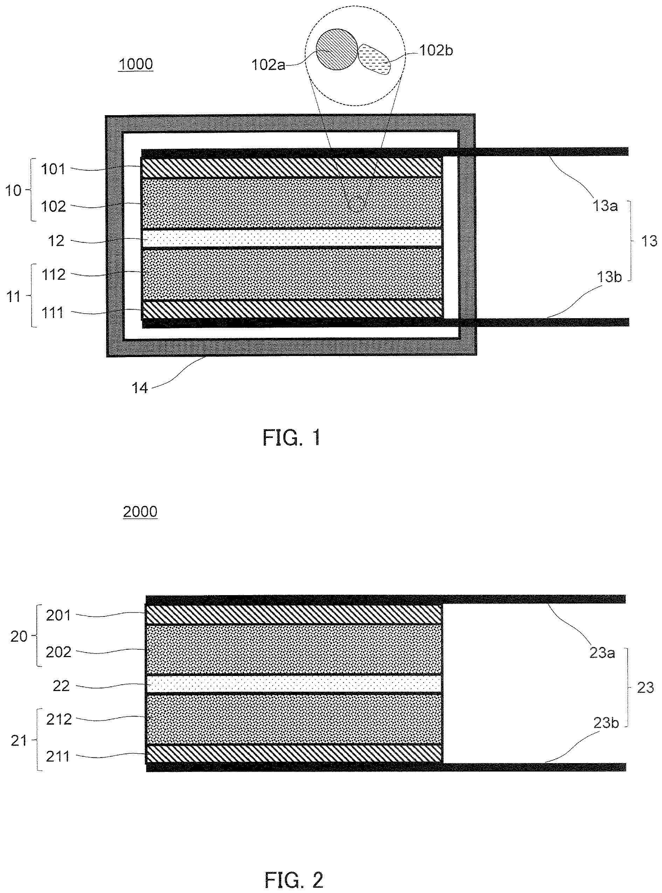

FIG. 1 is a schematic view showing a cross section of a battery 1000 according to Embodiment 1. The battery 1000 includes a first electrode layer 10, a second electrode layer 11, and an electrolyte layer 12. The electrolyte layer 12 is disposed between the first electrode layer 10 and the second electrode layer 11, and includes a first solid electrolyte material.

The first electrode layer 10 includes a current collector layer 101 and a mixture layer 102. The second electrode layer 11 includes a current collector layer 111 and a mixture layer 112. Hereinafter, the current collector layer 101 and the mixture layer 102 are referred to as a first current collector layer 101 and a first mixture layer 102, respectively. Furthermore, the current collector layer 111 and the mixture layer 112 are referred to as a second current collector layer 111 and a second mixture layer 112, respectively.

The first mixture layer 102 includes an active material 102a and a second solid electrolyte material 102b. The second mixture layer 112 may also include an active material and a solid electrolyte material.

At least one selected from the group consisting of the first solid electrolyte material and the second solid electrolyte material 102b contains Li, M, and X. M is at least one selected from the group consisting of metal elements other than Li and metalloid elements. X is at least one selected from the group consisting of F, Cl, Br, and I.

The battery 1000 further includes: an electrode lead 13a connected to the first current collector layer 101; and an exterior body 14 covering the first electrode layer 10, the second electrode layer 11, and the electrolyte layer 12. An electrode lead 13b connected to the second current collector layer 111 may be further provided.

At least one selected from the group consisting of the first current collector layer 101, the electrode lead 13a, and the exterior body 14 has, in at least a partial region thereof, a copper content of less than 50 mass%. The second current collector layer 111 may have, in at least a partial region thereof, a copper content of less than 50 mass%.

Owing to the copper content of less than 50 mass% in the above region, the thermal stability of the battery 1000 is improved.

At least one selected from the group consisting of the first current collector layer 101, the electrode lead 13a, and the exterior body 14 may have, in at least a partial region thereof, a copper content of 4.5 mass% or less or less than 3.5 mass%. The second current collector layer 111 may have, in at least a partial region thereof, a copper content of 4.5 mass% or less or less than 3.5 mass%.

Owing to the copper content of 4.5 mass% or less or less than 3.5 mass% in the above region, the thermal stability of the battery 1000 is further improved.

In the present disclosure, the term "metalloid elements" are B, Si, Ge, As, Sb, and Te.

Furthermore, in the present disclosure, the term "metal elements" are:

(i) all the elements included in Groups 1 to 12 of the periodic table, except for hydrogen; and
(ii) all the elements included in Groups 13 to 16 of the periodic table, except for B, Si, Ge, As, Sb, Te, C, N, P, O, S, and Se.

In other words, in the present disclosure, the terms "metalloid elements" and "metal elements" are a group of elements that can become cations when forming an inorganic compound with a halogen element.

The battery 1000 according to Embodiment 1 will be described in detail below. The solid electrolyte material containing Li, M, and X may be a halide solid electrolyte material. In other words, in the battery 1000, at least one selected from the group consisting of the first solid electrolyte material and the second solid electrolyte material 102b may include a halide solid electrolyte material containing Li, M, and X. Note that, in the present disclosure, the term "halide solid electrolyte material" means a solid electrolyte material containing a halogen element and being free of sulfur. Furthermore, in the present disclosure, a sulfur-free solid electrolyte material means a solid electrolyte material represented by a composition formula including no sulfur element. Accordingly, a solid electrolyte material containing an extremely minute amount of a sulfur component, for example, 0.1 mass% or less of sulfur, is included in sulfur-free solid electrolyte materials. The halide solid electrolyte material may further contain oxygen as an anion other than a halogen element.

The following description of the battery 1000 describes respective embodiments in which at least a partial region of the first current collector layer 101, at least a partial region of the electrode lead 13a, and at least a partial region of the exterior body 14 have a copper content of less than 50 mass%.

[First Electrode Layer]

As described above, the first electrode layer 10 includes the first current collector layer 101 and the first mixture layer 102. The first mixture layer 102 is disposed on the first current collector layer 101. The first electrode layer 10 is a positive electrode layer or a negative electrode layer. Hereinafter, the first current collector layer 101 and the first mixture layer 102 will be described in detail.

<First Current Collector Layer>

As described in the section "BACKGROUND ART", Patent Literature 1 discloses an electrode including: a halide solid electrolyte material; an active material; and a positive electrode current collector, as well as a battery. In the battery disclosed in Patent Literature 1, an aluminum powder is used as the positive electrode current collector. In other words, the battery disclosed in Patent Literature 1 includes the halide solid electrolyte material, the active material, and the aluminum current collector. According to Patent Literature 1, the battery disclosed therein can improve the charge and discharge efficiency of the battery owing to this structure. However, Patent Literature 1 fails to reveal the details of the thermal stability of a battery including a halide solid electrolyte material.

The present inventors have studied a battery including a halide solid electrolyte material. As a result, the present inventors have found that in the case where the battery contains copper, a problem is caused where hydrogen halide generated by thermal decomposition of the halide solid electrolyte material corrodes copper contained in the battery to increase the resistance, resulting in a decrease in stability of the battery. More specifically, the halide solid electrolyte material thermally decomposes to generate a highly corrosive gas such as hydrogen chloride and hydrogen bromide. The corrosive gas corrodes copper in which a passive film is less likely to be formed. This is considered to be the reason for the decrease in thermal stability of the battery. Furthermore, it is considered that such a phenomenon cannot occur in materials which are less likely to generate a corrosive gas or materials which are less likely to thermally decompose, such as sulfide solid electrolyte materials and oxide solid electrolyte materials. In other words, such a problem above is considered to be a problem specific to halide solid electrolyte materials.

The present inventors have further studied based on the above findings. As a result, it has been found that, by setting the copper content in at least a partial region of a current collector used in a battery including a halide solid electrolyte material to less than 50 mass%, a decrease in electrical conductivity can be suppressed even with the structure of the battery in which the halide solid electrolyte material coexists with the current collector. As described above, the battery 1000 according to Embodiment 1 includes a halide solid electrolyte material in the first mixture layer 102 and/or in the electrolyte layer 12. The copper content in at least the partial region of the first current collector layer 101 is less than 50 mass%. Accordingly, the battery 1000 according to Embodiment 1 can suppress a reaction between a gas generated by the halide solid electrolyte material and the first current collector layer 101 to suppress an increase in resistance of the first current collector layer 101, and thus can improve the thermal stability of the battery.

Here, at least the partial region of the first current collector layer 101 refers to a contact portion of a surface of the first current collector layer 101 which is in contact with the first mixture layer 102. In other words, the copper content in the contact portion of the surface of the first current collector layer 101 which is in contact with the first mixture layer 102 is less than 50 mass%. Furthermore, the copper content in the entire surface of the first current collector layer 101 may be less than 50 mass%. Moreover, the entire first current collector layer 101 may satisfy a copper content of less than 50 mass%.

Additionally, the copper content in at least the partial region of the first current collector layer 101 may be less than 3.5 mass%. In the case where the copper content in the above region of the first current collector layer 101 is less than 3.5 mass%, the above reaction (i.e., the reaction between hydrogen halide and the first current collector layer 101) can be better suppressed, and thus the thermal stability of the battery 1000 further improves. Furthermore, the copper content in the entire surface of the first current collector layer 101 may be less than 3.5 mass%, and the entire first current collector layer 101 may satisfy a copper content of less than 3.5 mass%.

The copper content in at least the partial region of the first current collector layer 101 may be 0 mass%. In other words, the above region may contain no copper. Owing to the above region containing no copper, the reaction between hydrogen halide and the first current collector layer 101 is suppressed, and thus the thermal stability of the battery 1000 further improves.

In the case where the first current collector layer 101 contains copper, the copper content in the first current collector layer 101 may be 0.03 mass% or more. For example, in the case where the current collector layer contains a small amount of copper, the mechanical strength of the current collector layer improves, and thus the stability of the battery improves.

The material used as the first current collector layer 101 only needs to have electrical conductivity. Examples of the material as the first current collector layer 101 include a metal, a metalloid, and an alloy which is a mixture thereof.

Examples of the material used as the first current collector layer 101 include carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), aluminum (Al), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt). The first current collector layer 101 preferably contains at least one selected from the group consisting of carbon (C), iron (Fe), nickel (Ni), and aluminum (Al). The first current collector layer 101 may contain an alloy of the above metals.

In the case where the first current collector layer 101 contains iron, the iron content in the first current collector layer 101 may be 50 mass% or less or 1.5 mass% or less. In the case where charge and discharge, that is, an oxidation-reduction reaction, is repeated with the halide solid electrolyte material and iron being in contact with each other, corrosion of iron sometimes occurs inside the halide solid electrolyte material. Then, this causes a decrease in ionic conductivity of the halide solid electrolyte material and an increase in resistance of the halide solid electrolyte material, and thus the stability of the electrode might decrease. However, in the case where, for example, the iron content in the first current collector layer 101 is 50 mass% or less, particularly 1.5 mass% or less, a decrease in ionic conductivity of the halide solid electrolyte material can be suppressed even with the structure in which the halide solid electrolyte material is combined with the current collector. Consequently, the stability of the electrode can be improved.

The first current collector layer 101 may contain aluminum as a main component. Here, the phrase "the first current collector layer 101 contains aluminum as a main component" means that the aluminum content in the first current collector layer 101 is 50 mass% or more. Aluminum is a lightweight metal having a high electrical conductivity. Accordingly, the battery 1000 which includes the first current collector layer 101 containing aluminum as a main component can improve the weight energy density. The first current collector layer 101 containing aluminum as a main component may further contain an element other than aluminum. The first current collector layer 101 may contain at least one selected from the group consisting of carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt).

The first current collector layer 101 may contain an aluminum alloy. Aluminum alloys are lightweight and high in strength. Accordingly, the battery 1000 which includes the first current collector layer 101 containing an aluminum alloy can achieve a battery having both a high weight energy density and a high durability. The aluminum alloy is not particularly limited. Examples thereof include an Al-Cu alloy, an Al-Mn alloy, an Al-Mn-Cu alloy, and an Al-Fe-Cu alloy.

Additionally, the first current collector layer 101 may be formed of a polymer material mixed with a material having electrical conductivity.

The first current collector layer 101 may have, for example, a surface and an interior differing in material from each other. In this case, the copper content in the material of a contact portion of the surface which is in contact with the first mixture layer 102 is less than 50 mass%, and may be, for example, less than 3.5 mass%. In the first current collector layer 101, the copper content in the entirety of the material of the surface may be less than 50 mass%, or the entirety of the surface and the interior may be formed of a material having a copper content of less than 50 mass%.

In the case where the first current collector layer 101 has the structure in which the surface and the interior differ in material from each other, the first current collector layer 101 can be produced, for example, by coating the surface of the material forming the interior of the first current collector layer 101 with the material of the surface by plating, sputtering, or the like. Furthermore, the first current collector layer 101 can be produced also by applying a solution of the material of the surface or a dispersion of the material of the surface onto the surface of the material forming the interior of the first current collector layer 101 with a gravure coater, a die coater, or the like.

To the extent that the problem above can be solved, the first current collector layer 101 may contain an element or a component other than the materials above in consideration of contaminations, etc. For example, on a portion of the surface of the first current collector layer 101, an inevitable oxide film, etc. may be formed. In other words, the surface of the first current collector layer 101 may contain an inevitable oxide, etc.

Although the shape of the first current collector layer 101 is not limited, a material having a large surface roughness may be used to improve the adhesion to the first mixture layer 102.

The thickness of the first current collector layer 101 may be 0.1 $\mu$m or more and 1 mm or less. In the case where the thickness of the first current collector layer 101 is 0.1 $\mu$m or more, the strength of the first current collector layer 101 improves, thereby suppressing damages to the first current collector layer 101. Furthermore, in the case where the thickness of the first current collector layer 101 is 1 mm or less, the electrical resistance of the first electrode layer 10 decreases, thereby facilitating an operation of the battery 1000 at a high power. In other words, an appropriate adjustment of the thickness of the first current collector layer 101 allows to achieve stable manufacture of the battery 1000 and to operate the battery 1000 at a high power.

The copper content in the first current collector layer 101 can be determined by, for example, scanning electron microscope-energy dispersive X-ray spectroscopy (SEM-EDX). In the case where measurement by SEM-EDX is difficult, X-ray photoelectron spectroscopy (XPS) may be used for determining the copper content, for example.

[First Mixture Layer]

The first mixture layer 102 according to Embodiment 1 includes the active material 102a and the second solid electrolyte material 102b. As described above, at least one selected from the group consisting of the first solid electrolyte material included in the electrolyte layer 12 and the second solid electrolyte material 102b included in the first mixture layer 102 includes Li, M, and X. Here, an example in which the second solid electrolyte material 102b includes Li, M, and X will be described in detail.

<Second Solid Electrolyte Material>

As described above, the second solid electrolyte material 102b may include, for example, a halide solid electrolyte material containing Li, M, and X. Owing to the second solid electrolyte material 102b which includes a halide solid electrolyte material containing Li, M, and X, the ionic conductivity of the second solid electrolyte material 102b further improves, and thus the ionic conductivity of the first electrode layer 10 can further improve. This improves the charge and discharge efficiency of the battery 1000. Furthermore, owing to the second solid electrolyte material 102b which includes a halide solid electrolyte material containing Li, M, and X, the thermal stability of the battery 1000 can be improved. Moreover, since the halide solid electrolyte material is free of sulfur, the battery 1000 according to Embodiment 1 can suppress generation of hydrogen sulfide gas. Hereinafter, a halide solid electrolyte material containing Li, M, and X is referred to as a halide solid electrolyte material.

For example, the halide solid electrolyte material may be a material represented by the following composition formula (1).

$$Li_\alpha M_\beta X_\gamma \ldots \qquad \text{Formula (1)}$$

Here, in the composition formula (1) above, $\alpha$, $\beta$, and $\gamma$ are each a value greater than 0, and $\gamma$ can be, for example, 4 or 6.

With the structure above, the ionic conductivity of the halide solid electrolyte material improves, and thus the ionic conductivity of the first electrode layer 10 can improve. Accordingly, the charge and discharge efficiency of the battery 1000 can be further improved.

In the composition formula (1) above, the element M may include Y (= yttrium). In other words, the halide solid electrolyte material may contain Y as a metal element.

The halide solid electrolyte material containing Y may be represented, for example, by the following composition

formula (2).

$$Li_a Me_b Y_c X_6 \ ... \qquad\qquad Formula\ (2)$$

Here, a, b, and c may satisfy a + mb + 3c = 6 and c > 0. The element Me is at least one selected from the group consisting of metal elements other than Li and Y and metalloid elements. The symbol m represents the valence of the element Me. Additionally, in the case where the element Me includes a plurality of types of elements, mb represents the total of values each obtained by multiplying the composition ratio of each of the elements by the valence of the element. Assume a case where, for example, Me includes an element Me1 and an element Me2, the composition ratio of the element Me1 is represented by $b_1$, the valence of the element Me1 is represented by $m_1$, the composition ratio of the element Me2 is represented by $b_2$, and the valence of the element Me2 is represented by $m_2$. In this case, mb = $m_1 b_1$ + $m_2 b_2$ holds. In the composition formula (2) above, the element X is at least one selected from the group consisting of F, Cl, Br, and I.

The element Me may be, for example, at least one selected from the group consisting of Mg, Ca, Sr, Ba, Zn, Sc, Al, Ga, Bi, Zr, Hf, Ti, Sn, Ta, Gd, and Nb.

The following materials, for example, can be used as the halide solid electrolyte material. With the following materials, the ionic conductivity of the halide solid electrolyte material further improves, and thus the ionic conductivity of the first electrode layer 10 can further improve. Accordingly, the charge and discharge efficiency of the battery 1000 can be further improved.

The halide solid electrolyte material may be a material represented by the following composition formula (A1).

$$Li_{6-3d} Y_d X_6 \ ... \qquad\qquad Formula\ (A1)$$

Here, in the composition formula (A1), the element X is at least one selected from the group consisting of Cl, Br, and I. Furthermore, in the composition formula (A1), d satisfies 0 < d < 2.

The halide solid electrolyte material may be a material represented by the following composition formula (A2).

$$Li_3 Y X_6 \ ... \qquad\qquad Formula\ (A2)$$

Here, in the composition formula (A2), the element X is at least one selected from the group consisting of Cl, Br, and I.

The halide solid electrolyte material may be a material represented by the following composition formula (A3).

$$Li_{3-3\delta} Y_{1+\delta} Cl_6 \ ... \qquad\qquad Formula\ (A3)$$

Here, in the composition formula (A3), $\delta$ satisfies $0 < \delta \leq 0.15$.

The halide solid electrolyte material may be a material represented by the following composition formula (A4).

$$Li_{3-3\delta} Y_{1+\delta} Br_6 \ ... \qquad\qquad Formula\ (A4)$$

Here, in the composition formula (A4), $\delta$ satisfies $0 < \delta \leq 0.25$.

The halide solid electrolyte material may be a material represented by the following composition formula (A5).

$$Li_{3-3\delta+a} Y_{1+\delta-a} Me_a Cl_{6-x-y} Br_x I_y \ ... \qquad\qquad Formula\ (A5)$$

Here, in the composition formula (A5), the element Me is at least one selected from the group consisting of Mg, Ca, Sr, Ba, and Zn.

Furthermore, the composition formula (A5) above satisfies:

$-1 < \delta < 2$;
$0 < a < 3$;
$0 < (3 - 3\delta + a)$;
$0 < (1 + \delta - a)$;
$0 \leq x \leq 6$;
$0 \leq y \leq 6$; and
$(x + y) \leq 6$.

The halide solid electrolyte material may be a material represented by the following composition formula (A6).

$$Li_{3-3\delta}Y_{1+\delta-a}Me_aCl_{6-x-y}Br_xI_y \ldots \qquad \text{Formula (A6)}$$

Here, in the composition formula (A6) above, the element Me is at least one selected from the group consisting of Al, Sc, Ga, and Bi.

Furthermore, the composition formula (A6) above satisfies:

$-1 < \delta < 1$;
$0 < a < 2$;
$0 < (1 + \delta - a)$;
$0 \le x \le 6$;
$0 \le y \le 6$; and
$(x + y) \le 6$.

The halide solid electrolyte material may be a material represented by the following composition formula (A7).

$$Li_{3-3\delta-a}Y_{1+\delta-a}Me_aCl_{6-x-y}Br_xI_y \ldots \qquad \text{Formula (A7)}$$

Here, in the composition formula (A7) above, the element Me is at least one selected from the group consisting of Zr, Hf, and Ti.

Furthermore, the composition formula (A7) above satisfies:

$-1 < \delta < 1$;
$0 < a < 1.5$;
$0 < (3 - 3\delta - a)$;
$0 < (1 + \delta - a)$;
$0 \le x \le 6$;
$0 \le y \le 6$; and
$(x + y) \le 6$.

The halide solid electrolyte material may be a material represented by the following composition formula (A8).

$$Li_{3-3\delta-2a}Y_{1+\delta-a}Me_aCl_{6-x-y}Br_xI_y \ldots \qquad \text{Formula (A8)}$$

Here, in the composition formula (A8) above, the element Me is at least one selected from the group consisting of Ta and Nb.

Furthermore, the composition formula (A8) above satisfies:

$-1 < \delta < 1$;
$0 < a < 1.2$;
$0 < (3 - 3\delta - 2a)$;
$0 < (1 + \delta - a)$;
$0 \le x \le 6$;
$0 \le y \le 6$; and
$(x + y) \le 6$.

More specific examples which can be used as the halide solid electrolyte material include $Li_3YX_6$, $Li_2MgX_4$, $Li_2FeX_4$, $Li(Al, Ga, In)X_4$, and $Li_3(Al, Ga, In)X_6$. Here, in these materials, the element X is at least one selected from the group consisting of F, Cl, Br, and I. Note that, in the present disclosure, when an element in a formula is expressed such as "(Al, Ga, In)", this expression indicates at least one element selected form the group of elements in parentheses. In other words, the expression "(Al, Ga, In)" is synonymous with the expression "at least one selected from the group consisting of Al, Ga, and In". The same applies to other elements.

Furthermore, the shape of the halide solid electrolyte material is not particularly limited, and may be, for example, acicular, spherical, or ellipsoidal. The shape of the halide solid electrolyte material may be, for example, particulate.

Next, a method of manufacturing the halide solid electrolyte material will be described. Here, a method of manufacturing the halide solid electrolyte material represented by the composition formula (1) above will be exemplified.

First, depending on an intended composition, a plurality of types of binary halide raw material powders are prepared, for example. Binary halides refer to compounds consisting of two types of elements including a halogen element. For example, to produce $Li_3YCl_6$, a raw material powder $LiCl$ and a raw material powder $YCl_3$ are prepared at a molar ratio of 3: 1. At this time, the element types of "M" and "X" in the composition formula (1) can be determined by selecting the types of the raw material powders. Furthermore, the values of "$\alpha$", "$\beta$", and "$\gamma$" in the composition formula (1) can be adjusted by adjusting the types of the raw material powders, the blending ratio of the raw material powders, and the synthesis process.

The raw material powders are mixed and pulverized, and then reacted together by a mechanochemical milling method. Alternatively, the raw material powders may be mixed and pulverized, and then sintered in a vacuum or in an inert atmosphere. The firing condition may be, for example, firing in a range of 100°C to 550°C for 1 hour or more. By these methods, a halide solid electrolyte material represented by the composition formula (1) above can be obtained.

Additionally, the structure of the crystal phase (i.e., crystal structure) of the halide solid electrolyte material can be adjusted or determined in accordance with the reaction method and reaction conditions of the raw material powders.

The second solid electrolyte material 102b may include, in addition to the halide solid electrolyte material, at least one selected from the group consisting of a sulfide solid electrolyte material, an oxide solid electrolyte material, a polymer solid electrolyte material, a complex hydride solid electrolyte material, and the like. Alternatively, the second solid electrolyte material 102b may include, instead of the halide solid electrolyte material, at least one selected from the group consisting of a sulfide solid electrolyte material, an oxide solid electrolyte material, a polymer solid electrolyte material, a complex hydride solid electrolyte material, and the like.

In the present disclosure, the term "oxide solid electrolyte material" refers to a solid electrolyte material containing oxygen. Here, the oxide solid electrolyte material may further contain, as an anion other than oxygen, an anion other than sulfur and halogen elements.

Examples which can be used as the sulfide solid electrolyte material include $Li_2S-P_2S_5$, Li2S-SiS2, $Li_2S-B_2S_3$, Li2S-GeS2, $Li_{3.25}Ge_{0.25}P_{0.75}S_4$, and $Li_{10}GeP_2S_{12}$. Furthermore, LiX, $Li_2O$, $MO_q$, and/or $Li_pMO_q$, etc. may be added to these. Here, the element X in "LiX" is at least one selected from the group consisting of F, Cl, Br, and I. Moreover, the element M in "$MO_q$" and "$Li_pMO_q$" is at least one selected from the group consisting of P, Si, Ge, B, Al, Ga, In, Fe, and Zn. Additionally, p and q in "$MO_q$" and "$Li_pMO_q$" are each a natural number.

Examples which can be used as the oxide solid electrolyte material include: a NASICON solid electrolyte material typified by $LiTi_2(PO_4)_3$ and element-substituted substances thereof; a (LaLi)$TiO_3$-based perovskite solid electrolyte material; a LISICON-type solid electrolyte material typified by $Li_{14}ZnGe_4O_{16}$, $Li_4SiO_4$, and $LiGeO_4$ and element-substituted substances thereof; a garnet solid electrolyte material typified by $Li_7La_3Zr_2O_{12}$ and element-substituted substances thereof; $Li_3PO_4$ and N-substituted substances thereof; glass to which $Li_2SO_4$, $Li_2CO_3$, or the like has been added using a Li-B-O compound such as $LiBO_2$ or $Li_3BO_3$ as the base thereof; and glass ceramics.

Examples which can be used as the polymer solid electrolyte include a compound of a polymer compound and a lithium salt. The polymer compound may have an ethylene oxide structure. A polymer compound having an ethylene oxide structure can contain a large amount of lithium salt. This can further improve the ionic conductivity. Examples which can be used as the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. The lithium salts may be used alone, or two or more thereof may be used in combination.

Examples which can be used as the complex hydride solid electrolyte include $LiBH_4$-LiI and $LiBH_4-P_2S_5$.

<Active Material>

The active material 102a is a positive electrode active material or a negative electrode active material.

The positive electrode active material is, for example, a material having properties of occluding and releasing metal ions (e.g., lithium ions). Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)$O_2$, Li(Ni, Co, Mn)$O_2$, and $LiCoO_2$. In the case where a lithium-containing transition metal oxide is, for example, used as the positive electrode active material, it is possible to reduce the manufacturing costs of the battery 1000, and to increase the average discharge voltage.

Furthermore, to increase the energy density of the battery, lithium nickel cobalt manganese oxide may be used as the positive electrode active material. For example, the positive electrode active material may be Li(Ni, Co, Mn)$O_2$.

The negative electrode active material is, for example, a material having properties of occluding and releasing metal ions (e.g., lithium ions). Examples of the negative electrode active material include a metal material, a carbon material, an oxide, a nitride, a tin compound, and a silicon compound. The metal material may be an elemental metal or an alloy. Examples of the metal material include lithium metal and a lithium alloy. Examples of the carbon material include a natural graphite, a coke, a semi-graphitized carbon, a carbon fiber, a spherical carbon, an artificial graphite, and an amorphous carbon. By using silicon (Si), tin (Sn), a silicon compound, a tin compound, or the like, the capacity density of the battery 1000 can be improved.

<First Mixture Layer>

The first mixture layer 102 includes, for example, the halide solid electrolyte material as the second solid electrolyte material 102b. With this structure, the ionic conductivity inside the first mixture layer 102 increases, thereby allowing an operation at a high power.

In the case where the shape of the second solid electrolyte material 102b included in the first mixture layer 102 is particulate (e.g., spherical), the median diameter of the second solid electrolyte material 102b may be 100 $\mu$m or less. In the case where the median diameter of the second solid electrolyte material 102b is 100 $\mu$m or less, the active material 102a and the second solid electrolyte material 102b can be favorably dispersed in the first mixture layer 102. This improves the charge and discharge characteristics of the battery.

The median diameter of the second solid electrolyte material 102b included in the first mixture layer 102 may be smaller than that of the active material 102a. This allows the second halide solid electrolyte material 102b and the active material 102a to be favorably dispersed.

The median diameter of the active material 102a may be 0.1 $\mu$m or more and 100 $\mu$m or less. In the case where the median diameter of the active material is 0.1 $\mu$m or more, the active material 102a and the second solid electrolyte material 102b can be favorably dispersed in the first mixture layer 102. This improves the charge and discharge characteristics of the battery 1000. In the case where the median diameter of the active material 102a is 100 $\mu$m or less, the diffusion rate of lithium in the active material improves. This allows the battery 1000 to operate at a high power.

Here, the median diameter refers to a particle diameter at a cumulative volume of 50% in the volumetric particle size distribution. The volumetric particle size distribution is determined by a laser diffraction scattering method. The same applies to other materials below.

When the volume fractions of the active material 102a and the second halide solid electrolyte material 102b included in the first mixture layer 102 are defined as "v1: 100 - v1", $30 \leq v1 \leq 95$ may be satisfied. Here, v1 represents, when the total volume of the active material 102a and the second solid electrolyte material 102b included in the first mixture layer 102 is 100, the volume fraction of the active material 102a. In the case where $30 \leq v1$ is satisfied, a sufficient energy density of the battery is easily achieved. In the case where $v1 \leq 95$ is satisfied, an operation of the battery 1000 at a high power is further easily achieved.

The thickness of the first mixture layer 102 may be 10 $\mu$m or more and 500 $\mu$m or less. In the case where the thickness of the first mixture layer 102 is 10 $\mu$m or more, a sufficient energy density of the battery is easily achieved. In the case where the thickness of the first mixture layer 102 is 500 $\mu$m or less, an operation of the battery 1000 at a high power is further easily achieved.

The active material 102a may be coated with a coating material to reduce the interface resistance between the active material 102a and the second solid electrolyte material 102b. As the coating material, a material having a low electronic conductivity can be used. As the coating material, an oxide material, an oxide solid electrolyte material, etc. can be used.

Examples of the oxide material which can be used as the coating material include $SiO_2$, $Al_2O_3$, $TiO_2$, $B_2O_3$, $Nb_2O_5$, $WO_3$, and $ZrO_2$.

Examples of the oxide solid electrolyte material which can be used as the coating material include a Li-Nb-O compound such as $LiNbO_3$, a Li-B-O compound such as $LiBO_2$ and $Li_3BO_3$, a Li-Al-O compound such as $LiAlO_2$, a Li-Si-O compound such as $Li_4SiO_4$, a Li-S-O compound such as $Li_2SO_4$, a Li-Ti-O compound such as $Li_4Ti_5O_{12}$, a Li-Zr-O compound such as $Li_2ZrO_3$, a Li-Mo-O compound such as $Li_2MoO_3$, a Li-V-O compound such as $LiV_2O_5$, and a Li-W-O compound such as $Li_2WO_4$. Oxide solid electrolyte materials are high in ionic conductivity and in high-potential stability. Accordingly, using an oxide solid electrolyte material as the coating material can further improve the charge and discharge efficiency of the battery.

Additionally, the first mixture layer 102 may include a sulfide solid electrolyte material as the second solid electrolyte material 102b and use the halide solid electrolyte material described above as a coating material coating the active material 102a.

A method of manufacturing the first electrode layer 10 is, for example, a method in which a dispersion including the active material 102a and the second solid electrolyte material 102b, which form the first mixture layer 102, is coated onto the first current collector layer 101. As the dispersion, a slurry may be used in which the active material 102a and the second solid electrolyte material 102b are dispersed in a solvent. As the solvent, a solvent that does not react with halide solid electrolytes, for example, an aromatic solvent such as toluene can be used. Examples of the coating method include a die coating method, a gravure coating method, a doctor blade method, a bar coating method, a spray coating method, and an electrostatic coating method.

[Second Electrode Layer]

The second electrode layer 11 includes the second current collector layer 111 and the second mixture layer 112. The second mixture layer 112 is disposed on the second current collector layer 111. In the case where the first electrode layer 10 is a positive electrode layer, the second electrode layer 11 is a negative electrode layer. In the case where the first electrode layer 10 is a negative electrode layer, the second electrode layer 11 is a positive electrode layer. The structures and materials described for the first current collector layer 101 and the first mixture layer 102 are respectively applicable to the structures and materials of the second current collector layer 111 and the second mixture layer 112. Accordingly, the detailed description is omitted here.

Additionally, like the first current collector layer 101, the second current collector layer 111 may have, in at least a partial region thereof, a copper content of less than 50 mass% or less than 3.5 mass%. This further improves the thermal stability of the battery 1000. Note that the second current collector layer 111 does not need to include a region having a copper content of less than 50 mass%.

Additionally, the second mixture layer 112 may include a sulfide solid electrolyte material as the solid electrolyte material and use the halide solid electrolyte material described above as a coating material coating the active material.

[Electrolyte Layer]

The electrolyte layer 12 includes the first solid electrolyte material. At least one selected from the group consisting of the first solid electrolyte material included in the electrolyte layer 12 and the second solid electrolyte material 102b included in the first mixture layer 102 includes a halide solid electrolyte material.

The halide solid electrolyte material which can be used as the first solid electrolyte material is the same as the material described as the halide solid electrolyte material which can be used as the second solid electrolyte material 102b. Accordingly, the detailed description is omitted here. Examples which can be used as the first solid electrolyte material included in the electrolyte layer 12 include, in addition to the halide solid electrolyte material, a sulfide solid electrolyte material, an oxide solid electrolyte material, a polymer solid electrolyte material, a complex hydride solid electrolyte material, and the like.

Additionally, the electrolyte layer 12 may include the first solid electrolyte material as a main component. In other words, the electrolyte layer 12 may include, the first solid electrolyte material, for example, at a mass proportion of 70% or more (70 mass% or more) with respect to the entire electrolyte layer 12.

With the structure above, the charge and discharge characteristics of the battery 1000 can be further improved.

Additionally, while including the first solid electrolyte material as a main component, the electrolyte layer 12 may further include inevitable impurities, or a starting material used for synthesis of the solid electrolyte material, a by-product, a decomposition product, etc.

Furthermore, the electrolyte layer 12 may include the first solid electrolyte material, for example, at a mass proportion of 100% (100 mass%) with respect to the entire electrolyte layer 12, except for inevitably incorporated impurities.

With the structure above, the charge and discharge characteristics of the battery 1000 can be further improved.

Additionally, the electrolyte layer 12 may include two or more of the materials listed as the first solid electrolyte material. For example, the electrolyte layer 12 may include a halide solid electrolyte material and a sulfide solid electrolyte material.

The thickness of the electrolyte layer 12 may be 1 $\mu$m or more and 300 $\mu$m or less. In the case where the thickness of the electrolyte layer 12 is 1 $\mu$m or more, a possibility of a short-circuit between the first electrode layer 10 and the second electrode layer 11 is reduced. Furthermore, in the case where the thickness of the electrolyte layer 12 is 300 $\mu$m or less, an operation at a high power is easily achieved. In other words, an appropriate adjustment of the thickness of the electrolyte layer 12 allows to achieve a sufficient safety of the battery 1000 and to operate the battery 1000 at a high power.

The shape of the first solid electrolyte material included in the electrolyte layer 12 is not limited. The shape of the first solid electrolyte material may be, for example, acicular, spherical, or ellipsoidal. The shape of the first solid electrolyte material may be, for example, particulate.

[Electrode Lead]

The electrode lead 13 can be used to extract an electric current from the battery 1000 to an external circuit. The electrode lead 13 is composed of, for example, the electrode lead 13a joined to the first current collector layer 101 of the first electrode layer 10 and the electrode lead 13a joined to the second current collector layer 111 of the second electrode layer 11.

The present inventors have studied a reaction between a hydrogen halide gas generated by thermal decomposition of a halide solid electrolyte material and an electrode lead. It is considered that, by setting the copper content in at least a partial region of the electrode lead 13 used in the battery 1000 to less than 50 mass%, a decrease in electrical conductivity and a decrease in mechanical strength of the electrode lead which are due to the above reaction can be suppressed even with the structure of the battery 1000 in which the halide solid electrolyte material coexists with the electrode lead. Note that, in the present embodiment, from among the electrode leads included in the electrode lead 13, at least the electrode lead 13a, which is joined to the first current collector layer 101 of the first electrode layer 10, only needs to satisfy the above copper content. Here, at least a partial region of the electrode lead 13a refers to a contact portion of the surface of the electrode lead 13a which is in contact with the first current collector layer 101 and a contact portion of the surface of the electrode lead 13a which is in contact with the exterior body 14. In other words, the copper content in the contact portion of the surface of the electrode lead 13a which is in contact with the first current collector layer 101 and the contact portion of the surface of the electrode lead 13a which is in contact with the exterior body 14 is less than 50 mass%. Furthermore, the copper content in the entire surface of the electrode lead 13a may be less than 50 mass%. Moreover, the entire electrode lead 13a may satisfy a copper content of less than 50 mass%. The electrode lead 13b, which is joined to the second current collector layer 111 of the second electrode layer 11, also may satisfy the above copper content. In this case, at least a partial region of the electrode lead 13b is similar to that of the electrode lead 13a.

As described above, in the battery 1000, the electrode lead 13a has, in at least the partial region, a copper content of less than 50 mass%. Furthermore, the electrode lead 13b also may have, in at least the partial region, a copper content of less than 50 mass%. Accordingly, the battery 1000 suppresses the reactivity between a hydrogen halide gas generated by thermal decomposition of the halide solid electrolyte and the electrode lead 13 to suppress an increase in resistance, and thus can improve the stability of the battery 1000.

Furthermore, the electrode lead 13a may have, in at least the partial region, a copper content of less than 3.5 mass%. Moreover, the electrode lead 13b also may have, in at least the partial region, a copper content of less than 3.5 mass%. In this case, a reaction between copper contained in the electrode lead 13 and hydrogen halide generated from the halide solid electrolyte material can be suppressed better, and thus the thermal stability of the battery 1000 can be further improved.

The material used as the electrode lead 13 only needs to have electrical conductivity, and is, for example, a metal, a metalloid, or an alloy which is a mixture thereof.

Examples of the material used as the electrode lead 13 include carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), aluminum (Al), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt). The electrode lead 13 preferably contains at least one selected from the group consisting of carbon (C), iron (Fe), nickel (Ni), and aluminum (Al). The electrode lead 13 may contain an alloy of the above metals.

In the case where the electrode lead 13 contains iron, the iron content in the electrode lead 13 may be 50 mass% or less or 1.5 mass% or less. In the case where charge and discharge, that is, an oxidation-reduction reaction, is repeated with the halide solid electrolyte material and iron being in contact with each other, corrosion of iron sometimes occurs inside the halide solid electrolyte material. Then, this causes a decrease in ionic conductivity of the halide solid electrolyte material and an increase in resistance of the halide solid electrolyte material, and thus the stability of the electrode might decrease. However, for example, in the case where the iron content in the electrode lead 13 is 50 mass% or less, particularly 1.5 mass% or less, the decrease in ionic conductivity of the halide solid electrolyte material can be suppressed even with the structure in which the electrode lead 13 is in contact with the halide solid electrolyte material. Consequently, the stability of the electrode can be improved.

The electrode lead 13 may contain aluminum as a main component. Here, the phrase "the electrode lead 13 contains aluminum as a main component" means that the aluminum content in the electrode lead 13 is 50 mass% or more. Aluminum is a lightweight metal having a high electrical conductivity. Accordingly, the battery 1000 which includes the electrode lead 13 containing aluminum as a main component can improve the weight energy density. The electrode lead 13 containing aluminum as a main component may further contain an element other than aluminum.

The electrode lead 13 may contain an aluminum alloy. Aluminum alloys are lightweight and high in strength. Accordingly, the battery 1000 which includes the electrode lead 13 containing an aluminum alloy can achieve a battery having both a high weight energy density and a high durability. The aluminum alloy is not particularly limited. Examples thereof include an Al-Cu alloy, an Al-Mn alloy, an Al-Mn-Cu alloy, and an Al-Fe-Cu alloy.

Additionally, the electrode lead 13 may be formed of a polymer material mixed with a material having electrical conductivity.

The electrode lead 13 may have, for example, a surface and an interior differing in surface from each other. In this case, in the electrode lead 13a, the copper content in the material of a contact portion of the surface which is in contact with the first current collector layer 101 and the material of a contact portion of the surface which is in contact with the exterior body 14 is less than 50 mass%, and may be, for example, less than 3.5 mass%. As the material of the surface of the electrode lead 13, the above material examples of the electrode lead 13 may be used, and the material of the interior of the electrode lead 13 may be covered with the above material examples.

Additionally, the electrode lead 13a and the electrode lead 13b may be formed using different materials.

The copper content in the electrode lead 13 can be determined by, for example, SEM-EDX. In the case where measurement by SEM-EDX is difficult, XPS may be used for determining the copper content.

[Exterior Body]

By including the exterior body 14, intrusion of water or gas containing moisture from the outside is suppressed. By setting the copper content in at least a partial region of the exterior body 14 used in the battery 1000 to less than 50 mass%, a reaction is suppressed between hydrogen halide generated by thermal decomposition of a halide solid electrolyte material and the exterior body 14. Accordingly, it is considered that, by setting the copper content in at least the partial region of the exterior body 14 to less than 50 mass%, a decrease in mechanical strength of the exterior body 14 due to heat can be suppressed even with the structure of the battery 1000 in which the halide solid electrolyte material coexists with the exterior body 14.

As described above, in the battery 1000 according to Embodiment 1, the exterior body 14 has, in at least the partial region, a copper content of less than 50 mass%. Accordingly, the battery 1000 according to Embodiment 1 suppresses a decrease in mechanical strength of the exterior body 14 due to a halogen gas generated by heat generation caused by charge and discharge of the battery 1000, and thus improves the safety of the battery 1000. Consequently, the battery 1000 can improve the thermal stability.

Additionally, the exterior body 14 may have, in at least the partial region, a copper content of less than 3.5 mass%. In this case, a reaction between copper contained in the exterior body 14 and hydrogen halide generated from the halide solid electrolyte material can be suppressed better, and thus the thermal stability of the battery 1000 can be further improved.

At least the partial region of the exterior body 14 is a portion facing at least one selected from the group consisting of the electrolyte layer 12 and the first electrode layer 10. In other words, the copper content is less than 50 mass% in the region of the exterior body 14 consisting of a portion facing the electrolyte layer 12, a portion facing the first electrode layer 10, and a portion facing both the electrolyte layer 12 and the first electrode layer 10. With this structure, a reaction between copper contained in the exterior body 14 and hydrogen halide generated from the halide solid electrolyte material can be suppressed more effectively, and thus the thermal stability of the battery 1000 can be further improved. Furthermore, the copper content in the entire surface of the exterior body 14 may be less than 50 mass%. Moreover, the entire exterior body 14 may satisfy a copper content of less than 50 mass%.

The exterior body 14 only needs to be a member capable of sealing a battery main body portion thereinside, and is not particularly limited. For example, the exterior body 14 may be a moistureproof multilayer film having a metal foil layer formed of a metal foil capable of increasing the airtightness and a thermally-fused layer including a thermoplastic resin. The above metal foil layer can suppress transmission of gas into the battery main body portion, and the above thermally-fused layer can achieve a battery having an excellent strength.

Examples of a metal foil material used for the exterior body 14 include a metal, a metalloid, and an alloy which is a mixture thereof.

Examples of the metal foil material used for the exterior body 14 include carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), aluminum (Al), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt). The exterior body 14 preferably contains at least one selected from the group consisting of carbon (C), iron (Fe), nickel (Ni), and aluminum (Al). The exterior body 14 may contain an alloy of the above metals.

In the case where the exterior body 14 contains iron, the iron content in the exterior body 14 may be 50 mass% or less or 1.5 mass% or less. In the case where charge and discharge, that is, an oxidation-reduction reaction, is repeated with the halide solid electrolyte material and iron being in contact with each other, corrosion of iron sometimes occurs inside the halide solid electrolyte material. Then, this causes a decrease in ionic conductivity of the halide solid electrolyte material and an increase in resistance of the halide solid electrolyte material, and thus the stability of the electrode might decrease. However, for example, in the case where the iron content in the exterior body 14 is 50 mass% or less, particularly 1.5 mass% or less, the decrease in ionic conductivity of the halide solid electrolyte material can be suppressed even with the structure in which the exterior body 14 is in contact with the halide solid electrolyte material. Consequently, the stability of the electrode can be improved.

The metal foil material used for the exterior body 14 may contain aluminum as a main component. Here, the phrase "the metal foil material used for the exterior body 14 contains aluminum as a main component" means that the aluminum content in the metal foil material used for the exterior body 14 is 50 mass% or more. Aluminum is a lightweight metal having a high electrical conductivity. Accordingly, the battery 1000 which includes the exterior body 14 containing aluminum as a main component can improve the weight energy density. The exterior body 14 containing aluminum as a main component may further contain an element other than aluminum.

The metal foil material used for the exterior body 14 may contain an aluminum alloy. Aluminum alloys are lightweight and high in strength. Accordingly, the battery 1000 which includes the exterior body 14 containing an aluminum alloy can achieve a battery having both a high weight energy density and a high durability. The aluminum alloy is not particularly limited. Examples thereof include an Al-Cu alloy, an Al-Mn alloy, an Al-Mn-Cu alloy, and an Al-Fe-Cu alloy.

A polymer material may be used for the exterior body 14. As the polymer material, a thermoplastic resin is preferred. Examples which can be used as the above thermoplastic resin include a polyamide resin such as nylon, polyethylene terephthalate, a vinyl acetate resin, an acrylic resin, an epoxy resin, and a polyolefin resin such as polyethylene and polypropylene.

The exterior body 14 may have, for example, a surface and an interior differing in material from each other. In this case, the copper content in the material of the surface is less than 50 mass%, and may be, for example, less than 3.5 mass%. As the material of the surface of the exterior body 14, the above material examples of the exterior body 14 may be used, and the material of the interior of the exterior body 14 may be covered with the above material examples.

The copper content in the exterior body 14 can be determined by, for example, SEM-EDX. In the case where measurement by SEM-EDX is difficult, XPS may be used for determining the copper content.

The shape of the battery 1000 is, for example, a coin type, a cylindrical type, a prismatic type, a sheet type, a button type, a flat type, or a stack type.

The battery 1000 according to Embodiment 1 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

(Embodiment 2)

Embodiment 2 will be described below. The description overlapping with that of Embodiment 1 described above will be omitted as appropriate.

FIG. 2 is a schematic view showing a cross section of a battery 2000 according to Embodiment 2.

The battery 2000 includes a first electrode layer 20, a second electrode layer 21, and an electrolyte layer 22. The electrolyte layer 22 is disposed between the first electrode layer 20 and the second electrode layer 21, and includes the first solid electrolyte material.

The first electrode layer 20 includes a current collector layer 201 and a mixture layer 202. The second electrode layer 21 includes a current collector layer 211 and a mixture layer 212. Hereinafter, the current collector layer 201 and the mixture layer 202 are referred to as a first current collector layer 201 and a first mixture layer 202, respectively. Also, the current collector layer 211 and the mixture layer 212 are referred to as a second current collector layer 211 and a second mixture layer 212, respectively.

The battery 2000 further includes an electrode lead 23a connected to the first current collector layer 201. An electrode lead 23b connected to the second current collector layer 211 may be further provided.

At least one selected from the group consisting of the first current collector layer 201 and the electrode lead 23a has, in at least a partial region thereof, a copper content of less than 50 mass%. The second current collector layer 211 may have, in at least a partial region thereof, a copper content of less than 50 mass%. The electrode lead 23b may have, in at least a partial region thereof, a copper content of less than 50 mass%.

Owing to the copper content of less than 50 mass% in the above region, the thermal stability of the battery 2000 is improved.

The at least one selected from the group consisting of the first current collector layer 201 and the electrode lead 23a may have, in at least the partial region, a copper content of 4.5 mass% or less or less than 3.5 mass%. The second current collector layer 211 may have, in at least the partial region, a copper content of 4.5 mass% or less or less than 3.5 mass%. The electrode lead 23b may have, in at least the partial region, a copper content of 4.5 mass% or less or less than 3.5 mass%.

Owing to the copper content of 4.5 mass% or less or less than 3.5 mass% in the above region, the thermal stability of the battery 2000 is further improved.

As the first current collector layer 201, the first current collector layer 101 described in Embodiment 1 can be used.

As the first mixture layer 202, the first mixture layer 102 described in Embodiment 1 can be used.

As the second current collector layer 211, the second current collector layer 111 described in Embodiment 1 can be used.

As the second mixture layer 212, the second mixture layer 112 described in Embodiment 1 can be used.

As the electrolyte layer 22, the electrolyte layer 12 described in Embodiment 1 can be used.

As the electrode lead 23, the electrode lead 13 described in Embodiment 1 can be used.

The shape of the battery 2000 is, for example, a coin type, a cylindrical type, a prismatic type, a sheet type, a button type, a flat type, or a stack type.

The battery 2000 according to Embodiment 2 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

(Embodiment 3)

Embodiment 3 will be described below. The description overlapping with those of Embodiments 1 and 2 described above will be omitted as appropriate.

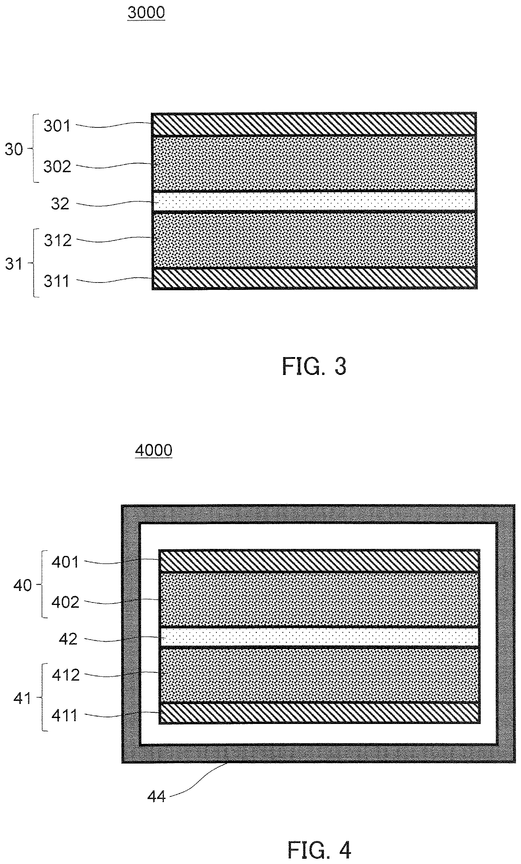

FIG. 3 is a schematic view showing a cross section of a battery 3000 according to Embodiment 3.

The battery 3000 includes a first electrode layer 30, a second electrode layer 31, and an electrolyte layer 32. The electrolyte layer 32 is disposed between the first electrode layer 30 and the second electrode layer 31, and includes the first solid electrolyte material.

The first electrode layer 30 includes a current collector layer 301 and a mixture layer 302. The second electrode layer 31 includes a current collector layer 311 and a mixture layer 312. Hereinafter, the current collector layer 301 and the mixture layer 302 are referred to as a first current collector layer 301 and a first mixture layer 302, respectively. Also, the current collector layer 311 and the mixture layer 312 are referred to as a second current collector layer 311 and a second mixture layer 312, respectively.

The first current collector layer 301 has, in at least a partial region thereof, a copper content of less than 50 mass%. The second current collector layer 311 may have, in at least a partial region thereof, a copper content of less than 50 mass%.

Owing to the copper content of less than 50 mass% in the above region, the thermal stability of the battery 3000 is improved.

The first current collector layer 301 may have, in at least the partial region, a copper content of 4.5 mass% or less or less than 3.5 mass%. The second current collector layer 311 may have, in at least the partial region, a copper content of 4.5 mass% or less or less than 3.5 mass%.

Owing to the copper content of 4.5 mass% or less or less than 3.5 mass% in the above region, the thermal stability of the battery 3000 is further improved.

As the first current collector layer 301, the first current collector layer 101 described in Embodiment 1 can be used.

As the first mixture layer 302, the first mixture layer 102 described in Embodiment 1 can be used.

As the second current collector layer 311, the second current collector layer 111 described in Embodiment 1 can be used.

As the second mixture layer 312, the second mixture layer 112 described in Embodiment 1 can be used.

As the electrolyte layer 32, the electrolyte layer 12 described in Embodiment 1 can be used.

The shape of the battery 3000 is, for example, a coin type, a cylindrical type, a prismatic type, a sheet type, a button type, a flat type, or a stack type.

The battery 3000 according to Embodiment 3 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

(Embodiment 4)

Embodiment 4 will be described below. The description overlapping with those of Embodiments 1 to 3 described above will be omitted as appropriate.

FIG. 4 is a schematic view showing a cross section of a battery 4000 according to Embodiment 4.

The battery 4000 includes a first electrode layer 40, a second electrode layer 41, and an electrolyte layer 42. The electrolyte layer 42 is disposed between the first electrode layer 40 and the second electrode layer 41, and includes the first solid electrolyte material.

The first electrode layer 40 includes a current collector layer 401 and a mixture layer 402. The second electrode layer 41 includes a current collector layer 411 and a mixture layer 412. Hereinafter, the current collector layer 401 and the mixture layer 402 are referred to as a first current collector layer 401 and a first mixture layer 402, respectively. Also, the current collector layer 411 and the mixture layer 412 are referred to as a second current collector layer 411 and a second mixture layer 412, respectively.

The battery 4000 further includes an exterior body 44 covering the first electrode layer 40, the second electrode layer 41, and the electrolyte layer 42.

At least one selected from the group consisting of the first current collector layer 401 and the exterior body 44 has, in at least a partial region thereof, a copper content of less than 50 mass%. The second current collector layer 411 may have, in at least a partial region thereof, a copper content of less than 50 mass%.

Owing to the copper content of less than 50 mass% in the above region, the thermal stability of the battery 4000 is improved.

The at least one selected from the group consisting of the first current collector layer 401 and the exterior body 44 may have, in at least the partial region, a copper content of 4.5 mass% or less or less than 3.5 mass%. The second current collector layer 411 may have, in at least the partial region, a copper content of 4.5 mass% or less or less than 3.5 mass%.

Owing to the copper content of 4.5 mass% or less or less than 3.5 mass% in the above region, the thermal stability of the battery 4000 is further improved.

As the first current collector layer 401, the first current collector layer 101 described in Embodiment 1 can be used.

As the first mixture layer 402, the first mixture layer 102 described in Embodiment 1 can be used.

As the second current collector layer 411, the second current collector layer 111 described in Embodiment 1 can be used.

As the second mixture layer 412, the second mixture layer 112 described in Embodiment 1 can be used.

As the electrolyte layer 42, the electrolyte layer 12 described in Embodiment 1 can be used.

As the exterior body 44, the exterior body 14 described in Embodiment 1 can be used.

The shape of the battery 4000 is, for example, a coin type, a cylindrical type, a prismatic type, a sheet type, a button type, a flat type, or a stack type.

The battery 4000 according to Embodiment 4 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

(Embodiment 5)

Embodiment 5 will be described below. The description overlapping with those of Embodiments 1 to 4 described above will be omitted as appropriate.

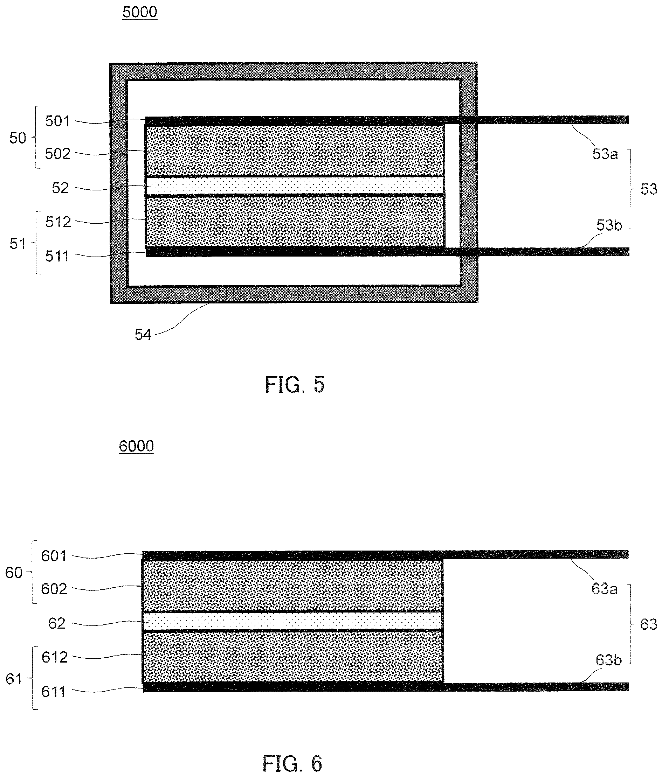

FIG. 5 is a schematic view showing a cross section of a battery 5000 according to Embodiment 5.

The battery 5000 includes a first electrode layer 50, a second electrode layer 51, and an electrolyte layer 52. The electrolyte layer 52 is disposed between the first electrode layer 50 and the second electrode layer 51, and includes the first solid electrolyte material.

The first electrode layer 50 includes a current collector layer 501 and a mixture layer 502. The second electrode layer 51 includes a current collector layer 511 and a mixture layer 512. Hereinafter, the current collector layer 501 and the mixture layer 502 are referred to as a first current collector layer 501 and a first mixture layer 502, respectively. Also, the current collector layer 511 and the mixture layer 512 are referred to as a second current collector layer 511 and a second mixture layer 512, respectively.

The battery 5000 further includes an electrode lead 53a connected to the first current collector layer 501. The electrode lead 53a is continuous with the first current collector layer 501, that is, integrally formed with the first current collector layer 501. An electrode lead 53b connected to the second current collector layer 511 may be further provided. The electrode lead 53b is continuous with the first current collector layer 511, that is, integrally formed with the first current collector layer 511.

The battery 5000 further includes an exterior body 54 covering the first electrode layer 50, the second electrode layer 51, and the electrolyte layer 2.

At least one selected from the group consisting of the first current collector layer 501, the electrode lead 53a, and the exterior body 54 has, in at least a partial region thereof, a copper content of less than 50 mass%. The second current collector layer 511 may have, in at least a partial region thereof, a copper content of less than 50 mass%. The electrode lead 53b may have, in at least a partial region thereof, a copper content of less than 50 mass%.

Owing to the copper content of less than 50 mass% in the above region, the thermal stability of the battery 5000 is improved.

The at least one selected from the group consisting of the first current collector layer 501, the electrode lead 53a, and the exterior body 54 may have, in at least the partial region, a copper content of 4.5 mass% or less or less than 3.5 mass%. The second current collector layer 511 may have, in at least the partial region, a copper content of 4.5 mass% or less or less than 3.5 mass%. The electrode lead 53b may have, in at least the partial region, a copper content of 4.5 mass% or less or less than 3.5 mass%.

Owing to the copper content of 4.5 mass% or less or less than 3.5 mass% in the above region, the thermal stability of the battery 2000 is further improved.

As the first current collector layer 501, the first current collector layer 101 described in Embodiment 1 can be used.

As the first mixture layer 502, the first mixture layer 102 described in Embodiment 1 can be used.

As the second current collector layer 511, the second current collector layer 111 described in Embodiment 1 can be used.

As the second mixture layer 512, the second mixture layer 112 described in Embodiment 1 can be used.

As the electrolyte layer 52, the electrolyte layer 12 described in Embodiment 1 can be used.

As the electrode lead 53, the electrode lead 13 described in Embodiment 1 can be used.

As the exterior body 54, the exterior body 14 described in Embodiment 1 can be used.

The shape of the battery 5000 is, for example, a coin type, a cylindrical type, a prismatic type, a sheet type, a button type, a flat type, or a stack type.

The battery 5000 according to Embodiment 5 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

(Embodiment 6)

Embodiment 6 will be described below. The description overlapping with those of Embodiments 1 to 5 described above will be omitted as appropriate.

FIG. 6 is a schematic view showing a cross section of a battery 6000 according to Embodiment 6.

The battery 6000 includes a first electrode layer 60, a second electrode layer 61, and an electrolyte layer 62. The electrolyte layer 62 is disposed between the first electrode layer 60 and the second electrode layer 61, and includes the first solid electrolyte material.

The first electrode layer 60 includes a current collector layer 601 and a mixture layer 602. The second electrode layer 61 includes a current collector layer 611 and a mixture layer 612. Hereinafter, the current collector layer 601 and the mixture layer 602 are referred to as a first current collector layer 601 and a first mixture layer 602, respectively. Also, the current collector layer 611 and the mixture layer 612 are referred to as a second current collector layer 611 and a second mixture layer 612, respectively.

The battery 6000 further includes an electrode lead 63a connected to the first current collector layer 601. The electrode lead 63a is continuous with the first current collector layer 601, that is, integrally formed with the first current collector layer 601. An electrode lead 63b connected to the second current collector layer 611 may be further provided. The electrode lead 63b is continuous with the first current collector layer 611, that is, integrally formed with the first current collector layer 611.

At least one selected from the group consisting of the first current collector layer 601 and the electrode lead 63a has, in at least a partial region thereof, a copper content of less than 50 mass%. The second current collector layer 611 may have, in at least a partial region thereof, a copper content of less than 50 mass%. The electrode lead 63b may have, in at least a partial region thereof, a copper content of less than 50 mass%.

Owing to the copper content of less than 50 mass% in the above region, the thermal stability of the battery 6000 is improved.

The at least one selected from the group consisting of the first current collector layer 601 and the electrode lead 63a may have, in at least the partial region, a copper content of 4.5 mass% or less or less than 3.5 mass%. The second current collector layer 211 may have, in at least the partial region, a copper content of 4.5 mass% or less or less than 3.5 mass%. The electrode lead 63b may have, in at least the partial region, a copper content of 4.5 mass% or less or less than 3.5 mass%.

Owing to the copper content of 4.5 mass% or less or less than 3.5 mass% in the above region, the thermal stability of the battery 6000 is further improved.

As the first current collector layer 601, the first current collector layer 101 described in Embodiment 1 can be used.

As the first mixture layer 602, the first mixture layer 102 described in Embodiment 1 can be used.

As the second current collector layer 611, the second current collector layer 111 described in Embodiment 1 can be used.

As the second mixture layer 612, the second mixture layer 112 described in Embodiment 1 can be used.

As the electrolyte layer 62, the electrolyte layer 12 described in Embodiment 1 can be used.

As the electrode lead 63, the electrode lead 13 described in Embodiment 1 can be used.

The shape of the battery 6000 is, for example, a coin type, a cylindrical type, a prismatic type, a sheet type, a button type, a flat type, or a stack type.

The battery 6000 according to Embodiment 6 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

(Embodiment 7)

Embodiment 7 will be described below. The description overlapping with those of Embodiments 1 to 6 described above will be omitted as appropriate.

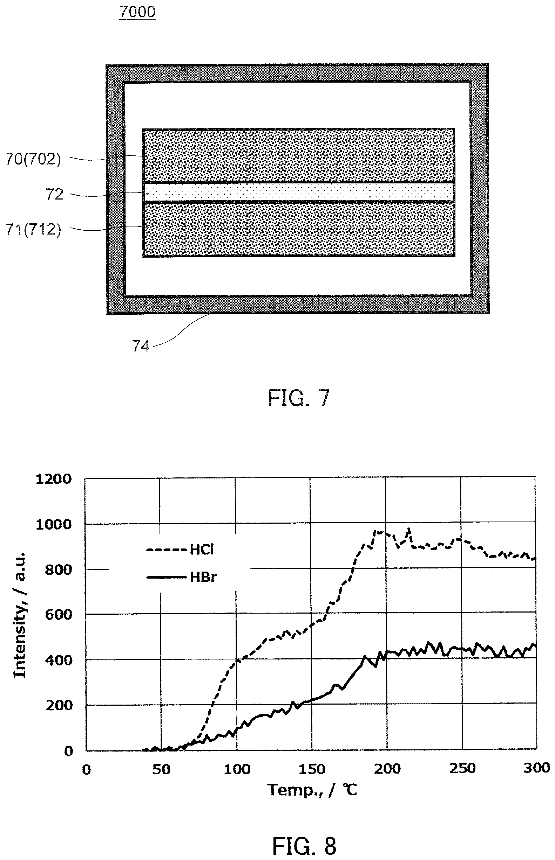

FIG. 7 is a schematic view showing a cross section of a battery 7000 according to Embodiment 7.

The battery 7000 includes a first electrode layer 70, a second electrode layer 71, and an electrolyte layer 72. The electrolyte layer 72 is disposed between the first electrode layer 70 and the second electrode layer 71, and includes the first solid electrolyte material.

The first electrode layer 70 includes a mixture layer 702. The second electrode layer 71 includes a mixture layer 712. Hereinafter, the mixture layer 702 is referred to as a first mixture layer 702. Also, the mixture layer 712 is referred to as a second mixture layer 712.

The battery 7000 further includes an exterior body 74 covering the first electrode layer 70, the second electrode layer 71, and the electrolyte layer 2.

The exterior body 74 has, in at least a partial region thereof, a copper content of less than 50 mass%.

Owing to the copper content of less than 50 mass% in the above region, the thermal stability of the battery 7000 is improved.

The exterior body 74 may have, in at least the partial region, a copper content of 4.5 mass% or less or less than 3.5 mass%.

Owing to the copper content of 4.5 mass% or less or less than 3.5 mass% in the above region, the thermal stability of the battery 7000 is further improved.

As the first mixture layer 702, the first mixture layer 102 described in Embodiment 1 can be used.

As the second mixture layer 712, the second mixture layer 112 described in Embodiment 1 can be used.

As the electrolyte layer 72, the electrolyte layer 12 described in Embodiment 1 can be used.

As the exterior body 74, the exterior body 14 described in Embodiment 1 can be used.

The shape of the battery 7000 is, for example, a coin type, a cylindrical type, a prismatic type, a sheet type, a button type, a flat type, or a stack type.

In the case where the battery 7000 is, for example, a coin-type battery, the exterior body 74 may be composed of a coin-type case and a sealing plate. In this case, the coin-type case is disposed adjacent to the first mixture layer 702 or the second mixture layer 712. The sealing plate is disposed adjacent to the second mixture layer 712 or the first mixture layer 702. In other words, in the case where the battery 7000 is a coin-type battery, the exterior body 74 can also function as a current collector.

The battery 7000 according to Embodiment 7 may be manufactured, for example, by preparing each of a material for forming a positive electrode, a material for forming an electrolyte layer, and a material for forming a negative electrode, and producing by a known method a stack in which the positive electrode, the electrolyte layer, and the negative electrode are disposed in this order.

Hereinafter, the details of the present disclosure will be described with reference to examples. Note that the battery of the present disclosure is not limited to the following examples.

<Example 1>

[Production of Halide Solid Electrolyte Material]

In an argon glove box with a dew point of -60°C or less, $YCl_3$, LiCl, and LiBr were weighed as raw material powders at a molar ratio of $YCl_3$: LiCl: LiBr = 1: 1: 2. Then, these raw material powders were mixed, and the resulting mixture was subjected to a firing process at 520°C for 2 hours using an electric furnace. Thus, $Li_3YBr_2Cl_4$ (hereinafter referred to as "LYBC"), which is a halide solid electrolyte material, was obtained.

[Production of Evaluation Samples]

An exterior body used was a stainless steel outer cylinder (copper content: less than 0.01 mass%) with a Kapton film thereinside as an insulator. In the exterior body, aluminum alloy A1085 for a current collector punched out to have Φ 9.2 mm, 100 mg of LYBC, and aluminum alloy A1085 for a current collector were stacked in this order. The resulting stack was pressurized at a pressure of 720 MPa to obtain an evaluation sample.

Next, to the top and the bottom of the sample, stainless steel leads (copper content: less than 0.01 mass%) were attached as electrode leads.

Next, the inside of the exterior body was blocked for sealing from the outside atmosphere with an insulating ferrule.

Finally, an electrochemical cell was held from above and below with four bolts to apply a surface pressure of 150 MPa to the battery.

In this way, an evaluation sample of Example 1 was produced. In the evaluation sample of Example 1, the copper content in the current collector was 0.03 mass%.

<Example 2>

In evaluation sample production, aluminum alloy A3003 (copper content: 0.05 mass%) was used as a current collector. The processes except for this were performed in a similar manner to the method of Example 1 described above to obtain an evaluation sample of Example 2.

<Example 3>

In evaluation sample production, aluminum alloy A8021 (copper content: 0.05 mass% or more and 0.20 mass% or less) was used as a current collector. The processes except for this were performed in a similar manner to the method of Example 1 described above to obtain an evaluation sample of Example 3.

<Example 4>

In evaluation sample production, aluminum alloy A2017 (copper content: 3.5 mass% or more and 4.5 mass% or less) was used as a current collector. The processes except for this were performed in a similar manner to the method of Example 1 described above to obtain an evaluation sample of Example 4.

<Evaluation of Halide Solid Electrolyte>

[Mass Spectrometry]

The above halide solid electrolyte was increased in temperature at a rate of 10°C per minute from 25°C to 300°C under a He gas flow of 80 mL per minute, and mass spectrometry of the generated gas was performed. The generation amounts of hydrogen chloride (HCl) and hydrogen bromide (HBr) generated from the LYBC during heating were read off. FIG. 8 is a graph showing the generation amounts of hydrogen chloride and hydrogen bromide generated by thermal decomposition of halide solid electrolyte $Li_3YBr_2Cl_4$.

<Evaluation of Evaluation Samples>

[Alternating Current Impedance Measurement]

With use of each of the evaluation samples of Examples 1 to 4, alternating current impedance measurement was performed under the following conditions.
The evaluation sample was placed in a thermostatic chamber at 25°C.
The impedance was measured at the open-circuit voltage at an alternating current amplitude of 10 mV in a frequency range from 1 MHz to 0.01 Hz, and this value was determined as the resistance value before heat treatment.
The evaluation sample was placed in a thermostatic chamber at 100°C or 200°C for 1 hour.
Then, the evaluation sample was placed in a thermostatic chamber at 25°C.
The impedance was measured at the open-circuit voltage at an alternating current amplitude of 10 mV in a frequency range from 1 MHz to 0.01 Hz.
For each of the evaluation samples of Examples 1 to 4 described above, the resistance value was read off from the alternating current impedance plot, and the rate of change in resistance value before and after the heat treatment at each of 100°C and 200°C was calculated using the following formula (3). The results are shown in Table 1.

(Resistance value after heat treatment - Resistance value before heat treatment)

$$\div \text{ Resistance value before heat treatment} \times 100 \; ... \; \text{Formula (3)}$$

[X-ray Photoelectron Spectroscopy]

The evaluation samples of Examples 1 to 4 after the above alternating current impedance measurement were taken out and washed with ethanol.

The evaluation sample of Example 1 was subjected to elemental analysis by X-ray photoelectron spectroscopy on the surface of the current collector which has been in contact with the halide solid electrolyte material and its depth direction.
The results are shown in Table 2.

[Table 1]

| | Material type of electrode current collector layer | Copper content in current collector layer in contact with electrode mixture layer mass% | Type of electrode lead and exterior body | Copper content in electrode lead and exterior body mass% | Rate of change in resistance after heat treatment at 100°C % | Rate of change in resistance after heat treatment at 200°C % |
|---|---|---|---|---|---|---|
| Example 1 | Aluminum alloy A1085 | 0.03 | Stainless steel | < 0.01 | -52.1 | -32.1 |
| Example 2 | Aluminum alloy A3003 | 0.05 to 0.20 | Stainless steel | < 0.01 | -37.9 | -66.3 |
| Example 3 | Aluminum alloy A8021 | 0.05 | Stainless steel | < 0.01 | -33.0 | -48.0 |
| Example 4 | Aluminum alloy A2017 | 3.5 to 4.5 | Stainless steel | < 0.01 | -26.8 | +38.8 |

[Table 2]

| Depth (nm) | Al | Cl | Br | Cl | Br |
|---|---|---|---|---|---|
| Outermost surface | 22 | 1 | < 1 | 1 | < 1 |
| 1 | 37 | < 1 | < 1 | < 1 | < 1 |
| 3 | 46 | < 1 | < 1 | < 1 | < 1 |
| 5 | 59 | < 1 | < 1 | < 1 | < 1 |
| 10 | 75 | < 1 | < 1 | < 1 | < 1 |
| 20 | 87 | < 1 | < 1 | < 1 | < 1 |
| 30 | 92 | < 1 | < 1 | < 1 | < 1 |
| 50 | 97 | < 1 | < 1 | < 1 | < 1 |
| 70 | 99 | < 1 | < 1 | < 1 | < 1 |
| 100 | 100 | < 1 | < 1 | < 1 | < 1 |

<Discussion>

According to the results of mass spectrometry of LYBC shown in FIG. 8, HCl and HBr were generated when the temperature was increased from 70°C to 300°C. Reaction of the generated hydrogen halide gas with the current collector, the electrode lead, and/or the exterior body causes a decrease in electrical conductivity and a decrease in mechanical strength of the current collector, the electrode lead, and/or the exterior body.

According to the results of Examples 1 to 4 shown in Table 1, the evaluation samples, which had, in the current collector layer in contact with the halide solid electrolyte material, a copper content of less than 50 mass%, decreased in resistance after the heat treatment at 100°C. This ascertained that the copper content in the current collector layer is preferably less than 50 mass%. Additionally, with respect to the rate of change in resistance after the heat treatment at 200°C, the electrolytic copper A2017 of Example 4 had the positive value whereas the electrode current collectors having a copper content of less than 3.5 mass% had the negative values. The rate of change in resistance after the heat treatment at 200°C was lower than that after the heat treatment at 100°C. This is considered to have been due to the progress of sintering of the solid electrolyte during the heat treatment and thus a decrease in grain-boundary resistance. It was ascertained that using a current collector having a copper content of less than 3.5 mass% such as above improves the thermal stability of the battery.

In the surface and depth analysis of the A1085 current collector of Example 1 shown in Table 2, the above Cl and Br were not detected.

The results ascertained that a current collector having a copper content of less than 50 mass% is less likely to deteriorate.

From the above, it was ascertained that the battery of the present disclosure improves the thermal stability of the battery.

INDUSTRIAL APPLICABILITY

The battery of the present disclosure can be utilized as, for example, an all-solid-state lithium ion secondary battery.

**Claims**

1. A battery comprising:

   a first electrode layer;
   a second electrode layer; and
   an electrolyte layer disposed between the first electrode layer and the second electrode layer, and including a first solid electrolyte material, wherein
   the first electrode layer includes a current collector layer and a mixture layer,
   the mixture layer includes an active material and a second solid electrolyte material,
   at least one selected from the group consisting of the first solid electrolyte material and the second solid electrolyte material includes Li, M, and X,
   the M is at least one selected from the group consisting of metal elements other than Li and metalloid elements,
   the X is at least one selected from the group consisting of F, Cl, Br, and I, and
   the battery satisfies the following (A), (B), (C), or (D):

      (A) the current collector layer has, in at least a partial region thereof, a copper content of less than 50 mass%;
      (B) the battery further comprises an electrode lead connected to the current collector layer, and
      at least one selected from the group consisting of the current collector layer and the electrode lead has, in at least a partial region thereof, a copper content of less than 50 mass%;
      (C) the battery further comprises an exterior body covering the first electrode layer, the second electrode layer, and the electrolyte layer, and
      at least one selected from the group consisting of the current collector layer and the exterior body has, in at least a partial region thereof, a copper content of less than 50 mass%; or
      (D) the battery further comprises: an electrode lead connected to the current collector layer; and an exterior body covering the first electrode layer, the second electrode layer, and the electrolyte layer, and
      at least one selected from the group consisting of the current collector layer, the electrode lead, and the exterior body has, in at least a partial region thereof, a copper content of less than 50 mass%.

2. The battery according to claim 1, wherein

   the battery satisfies the (A), and
   the current collector layer has, in at least the partial region, a copper content of less than 3.5 mass%.

3. The battery according to claim 1, wherein

   the battery satisfies the (B), and
   the at least one selected from the group consisting of the current collector layer and the electrode lead has, in at least the partial region, a copper content of less than 3.5 mass%.

**4.** The battery according to claim 1, wherein

the battery satisfies the (C), and
the at least one selected from the group consisting of the current collector layer and the exterior body has, in at least the partial region, a copper content of less than 3.5 mass%.

**5.** The battery according to claim 1, wherein

the battery satisfies the (D), and
the at least one selected from the group consisting of the current collector layer, the electrode lead, and the exterior body has, in at least the partial region, a copper content of less than 3.5 mass%.

**6.** The battery according to any one of claims 2 to 5, wherein
the current collector layer includes aluminum as a main component.

**7.** The battery according to claim 6, wherein
the current collector layer further includes an element other than aluminum.

**8.** A battery comprising:

a first electrode layer;
a second electrode layer;
an electrolyte layer disposed between the first electrode layer and the second electrode layer, and including a first solid electrolyte material; and
an exterior body covering the first electrode layer, the second electrode layer, and the electrolyte layer, wherein
the first electrode layer includes a mixture layer,
the mixture layer includes an active material and a second solid electrolyte material,
at least one selected from the group consisting of the first solid electrolyte material and the second solid electrolyte material includes Li, M, and X,
the M is at least one selected from the group consisting of metal elements other than Li and metalloid elements,
the X is at least one selected from the group consisting of F, Cl, Br, and I, and
the exterior body has, in at least a partial region thereof, a copper content of less than 50 mass%.

**9.** The battery according to claim 8, wherein
the exterior body has, in at least the partial region, a copper content of less than 3.5 mass%.

**10.** The battery according to any one of claims 1 to 9, wherein
the exterior body faces, in at least the partial region, at least one selected from the group consisting of the electrolyte layer and the first electrode layer.

FIG. 1

FIG. 2

3000

FIG. 3

4000

FIG. 4

5000

FIG. 5

6000

FIG. 6

7000

70(702)

72

71(712)

74

FIG. 7

FIG. 8

## INTERNATIONAL SEARCH REPORT

| | International application No. |
|---|---|
| | PCT/JP2020/048308 |

**A. CLASSIFICATION OF SUBJECT MATTER**
H01M 4/13(2010.01)i; H01M 4/62(2006.01)i; H01M 4/64(2006.01)i; H01M 4/66(2006.01)i; H01M 10/052(2010.01)i; H01M 10/0562(2010.01)i; H01M 50/10(2021.01)i; H01M 50/531(2021.01)i
FI:    H01M10/052; H01M10/0562; H01M4/13; H01M4/62 Z; H01M4/66 A; H01M4/64 A; H01M2/26 A; H01M2/02 K

According to International Patent Classification (IPC) or to both national classification and IPC

**B. FIELDS SEARCHED**

Minimum documentation searched (classification system followed by classification symbols)
H01M4/13; H01M4/62; H01M4/64; H01M4/66; H01M10/052; H01M10/0562; H01M50/10; H01M50/531

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2019/146217 A1 (PANASONIC IP MANAGEMENT CO., LTD.) 01 August 2019 (2019-08-01) examples, claims | 1-7, 10<br>3, 5, 8-9 |
| X<br>Y | WO 2017/141735 A1 (FUJIFILM CORPORATION) 24 August 2017 (2017-08-24) paragraph [0024], examples, claims | 1-2, 4, 6-10<br>3, 5, 8-9 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 February 2021 (08.02.2021) | 22 February 2021 (22.02.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT

Information on patent family members

International application No.

PCT/JP2020/048308

| Patent Documents referred in the Report | Publication Date | Patent Family | Publication Date |
|---|---|---|---|
| WO 2019/146217 A1 | 01 Aug. 2019 | (Family: none) | |
| WO 2017/141735 A1 | 24 Aug. 2017 | US 2018/0309167 A1 paragraph [0058], examples, claims EP 3419098 A1 CN 108475817 A KR 10-2018-0093091 A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146217 A